# EUROPEAN PATENT SPECIFICATION

(11) **EP 2 621 061 B1**
(45) Date of publication and mention of the grant of the patent: **29.04.2015**
(21) Application number: 12152699.0
(22) Date of filing: 26.01.2012
(51) Int. Cl.: H02K 3/50, H02K 7/18

(54) **Stator segment**
Statorsegment
Segment de stator

(43) Date of publication of application: 31.07.2013
(73) Proprietor: Siemens Aktiengesellschaft, 80333 München (DE)
(72) Inventor: Kimiabeigi, Mohammad, Sheffield, S6 1SE (GB); Thomas, Arwyn, Brithdir, SY22 5HF (GB)

(56) References cited:
- EP-A2- 1 020 976
- EP-A2- 1 294 076
- WO-A2-2011/006693
- JP-A- 61 177 136
- US-A- 6 157 109

## Description

### Field of invention

The present invention relates to a stator segment for a stator of an electrical machine, in particular a generator, for instance of a wind turbine. Further, the present invention relates to a stator comprising at least one such stator segment. Furthermore, the present invention relates to a generator comprising the stator. Moreover, the present invention relates to a method for manufacturing such a stator segment.

### Art Background

An electrical machine, for example a generator, may consist of a rotor and a stator, the stator comprising one or more coils. The end of the coils, extending to the outside of the stator, for instance of a PM generator, are also called end coils. The ends of the coils are usually long and half-circular shaped. This may lead to the case that the end coils or end of the coils have a rather low stiffness in the circumferential direction due to the relatively smaller dimension of the coil in this direction. Furthermore, the end coils are floating freely in the air and unlike the active parts of the coils, i.e., those parts, which contribute to the output torque, are not mechanically supported by the enclosing walls of the stator slots. Thus, they may be prone to severe vibrations as confirmed from measurement.

WO2011/006693 A3 shows a known stator segment.

Vibration(s) can damage the coil insulation especially at the joining point between the end of a stator pack, seen from an axial direction, and the beginning of the so-called end coil part, that means especially at the boundary between the active part of the coils and the end coils. Furthermore, vibrations of the end coils can be transferred to other parts of the generator structure and actuate resonance in other components which may result directly or indirectly in noise emission, which is, for instance, a significant drawback for wind turbines.

In common systems, the neighboring end coils are wrapped together via bondage as a way to reduce the freedom of the end coils in vibrating, in other terms transferring the vibration of each coil to a larger mode (that means to more coils) and in this way balancing out the resultant vibration. Though effective, this technique, for multi-pole wind generators with many number of end coils, may be manufacturing-wise expensive and especially time consuming.

Thus, there may be a need for an improved system reducing vibrations of the end coils.

### Summary of the Invention

This need may be met by the subject matter according to the independent claims. Advantageous embodiments of the present invention are described by the dependent claims.

According to an embodiment, a stator segment for a stator of an electrical machine, in particular a generator, is provided. The stator segment comprises a stator segment body, a coil being accommodated in recesses of the stator segment body in such a manner that an end section of the coil projects outwardly from the stator segment body, and a stabilizing layer, wherein the stabilizing layer is applied to the end section for reducing mechanical vibrations of the end section.

This embodiment is based on the idea that vibrations of the end section of the coil may be reduced by adding a stabilizing layer to the end section. Such a stabilizing layer may lead to a change in amplitude or frequency of the vibrations and thus may lead to a reduction of the vibrations.

According to this embodiment, a simple method is introduced to minimize the vibration of the end sections of the coils, for instance in DD PM generators, as an alternative to the conventional method of wrapping the end coils. The described stabilizing layer may be made and mantled at the same time of the winding manufacturing, thereby avoiding the extra time of conventional wrapping the end coils. Even applying the stabilizing layer after the coil manufacturing may provide a simpler and faster process compared to the conventional method, as the layer only might need to be applied and no wrapping process might be necessary. As a merit, the manufacturing cost, especially for a series production may be reduced.

According to an embodiment, the stabilizing layer comprises a stiffening material and/or a damping material.

A stiffening material may lead to an improved stability of the end sections. In particular, the stiffening material may improve the rather low stiffness in the circumferential direction of the end coil, which is based on the relatively smaller dimension of the coil in this direction. Furthermore, such a material may mechanically support the coils.

A damping material may reduce the liability to vibrations as such a damping material may reduce the vibrations by absorbing these vibrations.

The stiffening material and the damping material may be arranged overlaying or as adjacent parts of the layer. It is also possible to provide the stiffening material on one side of the end section and the damping material on the other side of the end section.

According to a further embodiment, the stabilizing layer is a double layer.

According to this embodiment, the stabilizing layer may comprise for instance the stiffening material and the damping material in an overlaying arrangement. Utilizing both materials together may provide the advantage that the end section may be stabilized and vibrations may be absorbed at the same time.

According to the invention, the stabilizing layer is applied to at least a portion of a surface of the end section facing the stator segment body.

Applying the layer at the inner surface or wall of the end section may provide the advantage that the layer is more protected against any damages from outside of the stator. Furthermore, the inner wall may provide a smaller surface than the outer wall and, thus, the amount of needed material may be reduced.

According to a further embodiment, the stabilizing layer comprises an elastic material.

An elastic material may be easily applied to the end section. Further, such a material may provide a damping effect.

According to a further embodiment, the elastic material is of one of the group consisting of plastics, wood, rubber, epoxy. Also other elastic materials may be possible.

According to a further embodiment, the stabilizing layer comprises an insulating material.

By using an insulating material, a short circuit with the conductors inside the coil and a damage of the insulation of the coil (for instance inside the recesses) may be avoided.

According to a further embodiment, the insulating material is of one of the group consisting of plastics, wood, rubber, epoxy. Also other materials providing an insulation function may be used.

According to a further embodiment, the stabilizing layer comprises a spring characteristic.

Such a spring characteristic may be characterized by a shape and an elasticity or springiness of the layer. The layer may have a shape or form of a spring, which may be clamped inside the curvature of the end section. The layer may be coupled to the end section, may open up at one side and may enhance the contact via spring pressure. Further, the layer may have an elasticity or springiness to provide the possibility to bend the layer to be inserted into the curvature (or any other kind of form) of the end section. Providing the stabilizing layer with a spring characteristic may provide the advantage that the layer holds itself, without the need of any additional adhesives.

According to a further embodiment, a stator of an electrical machine, in particular a generator, is provided. The stator comprises at least one stator segment having the above mentioned features.

The stator may comprise more than one stator segment. The stator segments may comprise stabilizing layers at the end sections of the coils. Furthermore, it may also be possible to apply the stabilizing layer in combination with conventional bondage of the end coils. This may be carried out for instance by applying the stabilizing layer to some of the end sections and wrapping the rest to achieve an improved manufacturing time and cost.

According to a further embodiment, a generator, in particular for a wind turbine, is provided. The generator comprises a rotor and a stator as described above.

Such a generator may be any kind of generator being known in the art. The rotor and the stator may be arranged in a common way, wherein the stator may comprise stator segments according to embodiments as described herein.

It should be understood that features (individually or in any combination) disclosed, described, used for or mentioned in respect to the description of an embodiment of a stator segment, a stator or a generator may also be (individually or in any combination) applied, used for, or employed for a method for manufacturing a stator segment.

According to a further embodiment, a method for manufacturing a stator segment for a stator of an electrical machine, in particular a generator, is provided, wherein the stator segment comprising a stator segment body, and a coil being accommodated in recesses of the stator segment body in such a manner that an end section of the coil projects outwardly from the stator segment body. The method comprises applying a stabilizing layer to the end section for reducing mechanical vibrations of the end section.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Embodiments of the present invention are now described with reference to the accompanying drawings to which the invention is not limited.
Fig. 1 illustrates a stator segment according to an embodiment;
Fig. 2 illustrates a stator segment with illustrated vibrations.

### Detailed Description

The illustration in the drawings is in schematic form. It is noted that in different figures, similar or identical elements are provided with the same reference signs.

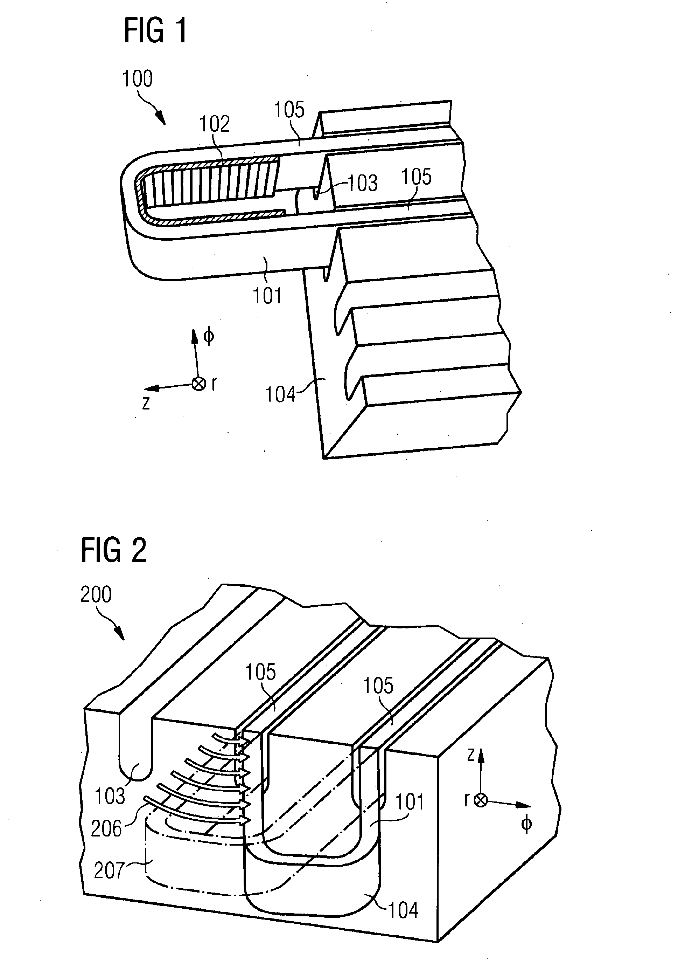

The end sections of coils in a PM generator, such as a wind turbine generator, are usually long and half-circular shaped, which has a rather low stiffness in the circumferential direction due to the relatively smaller dimension of the coil in this direction. Such an arrangement is shown in Figure 2. There is shown a stator segment 200, which is part of a stator, for instance of a generator. The stator segment 200 comprises a stator segment body 104 with recesses 103. The stator segment body 104 may be composed of stator laminations packed together. Coils 105 are arranged within these recesses. An end section 101 of the illustrated coil extends or projects outwardly of the stator segment body 104. The end section is floating freely in the air and, unlike the active parts of the coils 105, it is not mechanically supported by the enclosing walls of the stator slots or recesses 103. Thus, it is prone to severe vibrations as confirmed from measurement. Vibrations can damage the coil insulation especially at the joining point between the end of the stator pack, seen from axial direction, and the beginning of the end coil part, i.e., at the boundary between active part of the coils and the end sections (also called end coils). Furthermore, vibrations of the end sections can be transferred to other parts of the generator structure and actuate resonance in other components which results directly or indirectly in noise emission. A typical vibration of the end section is shown in Figure 2, wherein the displacement is shown by reference sign 207 and the movement is illustrated by the arrows 206. As may be seen, by getting further away from the stator stack/segment, the displacement gets larger and larger. Furthermore, as mentioned earlier, the vibration dominantly occurs in the circumferential direction.

In common systems, the neighboring end sections are wrapped together via bondage as a way to reduce the freedom of the end sections in vibrating, in other terms transferring the vibration of each coil to a larger mode, i.e., more coils, and, in this way, balancing out the resultant vibration. Though effective, this technique, for multi-pole wind generators with many number of end coils, may be manufacturing-wise expensive and especially time consuming. To damp the vibration of the active part of the coils, a possibility is to fill the stator slot areas by spring-like components which fix the windings by applying a pressure to windings and the slot walls.

In the stator segment 100 as shown in Figure 1, according to embodiments as described herein, an additional stabilizing layer 102, for instance made of an elastic material, may be applied to the end sections. As shown in Figure 1, this layer 102 is applied to an inner layer or wall of the end section 101. This additional layer, which may be called stiffener, can be applied at the same time with the manufacturing of the coils or can be applied as a separate module and coupled to the inner wall of the end coils. The material may be electrically insulating to avoid short circuit with the conductors inside the coil and damage of insulation. Furthermore, it may have a spring characteristics which upon mantling and couple to the end coils opens up and enhance the contact via spring pressure.

The material of the stabilizing layer may distribute the excitation forces rather uniformly along the end section curvature, this way increasing the global stiffness and lowering the vibration of the end section.

This stabilizing layer may be used in combination with conventional bondage of the end sections. For instance, the stabilizing layer may be applied to some of the end sections of coils of a stator and the rest may be wrapped to achieve an optimal manufacturing time and cost.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. A stator segment (100) for a stator of an electrical machine, in particular a generator, the stator segment comprising
a stator segment body (104),
a coil (105) being accommodated in recesses (103) of the stator segment body in such a manner that an end section (101) of the coil projects outwardly from the stator segment body, and **characterized by**
a stabilizing layer (102), wherein the stabilizing layer is applied to the end section for reducing mechanical vibrations of the end section
wherein the stabilizing layer (102) is only applied to a portion of an inner surface of the end section (101) facing the stator segment body (104).

2. The stator segment (100) as set forth in claim 1, wherein the stabilizing layer (102) comprises a stiffening material and/or a damping material.

3. The stator segment (100) as set forth in any one of the preceding claims, wherein the stabilizing layer (102) is a double layer.

4. The stator segment (100) as set forth in any one of the preceding claims, wherein the stabilizing layer (102) comprises an elastic material.

5. The stator segment (100) as set forth in claim 4, wherein the elastic material is of one of the group consisting of plastics, wood, rubber, epoxy.

6. The stator segment (100) as set forth in any one of the preceding claims, wherein the stabilizing layer (102) comprises an insulating material.

7. The stator segment (100) as set forth in claim 6, wherein the insulating material is of one of the group consisting of plastics, wood, rubber, epoxy.

8. The stator segment (100) as set forth in any one of the preceding claims, wherein the stabilizing layer (102) comprises a spring characteristic.

9. A stator of an electrical machine, in particular a generator, the stator comprising at least one stator segment (100) as set forth in any one of the preceding claims.

10. A generator, in particular for a wind turbine, the generator comprising
a rotor and
a stator as set forth in claim 9.

11. Method for manufacturing a stator segment (100) for a stator of an electrical machine, in particular a generator, the stator segment comprising a stator segment body (104), and a coil (105) being accommodated in recesses (103) of the stator segment body in such a manner that an end section (101) of the coil projects outwardly from the stator segment body, the method comprising **characterized by**
applying a stabilizing layer (102) to the end section for reducing mechanical vibrations of the end section,
wherein the stabilizing layer (102) is only applied to a portion of an inner surface of the end section (101) facing the stator segment body (104).

## Patentansprüche

1. Statorsegment (100) für einen Stator einer elektrischen Maschine, insbesondere eines Generators, das Folgendes umfasst:
einen Statorsegmentkörper (104),
eine Spule (105), die in Ausnehmungen (103) des Statorsegmentkörpers so untergebracht ist, dass ein Endabschnitt (101) der Spule aus dem Statorsegmentkörper ragt, und
**gekennzeichnet durch**
eine Stabilisierungsschicht (102), wobei die Stabilisierungsschicht zum Reduzieren mechanischer Vibrationen des Endabschnitts an dem Endabschnitt angebracht ist,
wobei die Stabilisierungsschicht (102) nur an einem Teil einer Innenfläche des Endabschnitts (101) angebracht ist, der dem Statorsegmentkörper (104) zugewandt ist.

2. Statorsegment (100) nach Anspruch 1, bei dem die Stabilisierungsschicht (102) ein Verstärkungsmaterial und/ oder ein Dämpfungsmaterial umfasst.

3. Statorsegment (100) nach einem der vorhergehenden Ansprüche, bei dem es sich bei der Stabilisierungsschicht (102) um eine doppelte Schicht handelt.

4. Statorsegment (100) nach einem der vorhergehenden Ansprüche, bei dem die Stabilisierungsschicht (102) ein elastisches Material umfasst.

5. Statorsegment (100) nach Anspruch 4, bei dem das elastische Material ein Material aus der Gruppe ist, die aus Kunststoff, Holz, Gummi, Epoxidharz besteht.

6. Statorsegment (100) nach einem der vorhergehenden Ansprüche, bei dem die Stabilisierungsschicht (102) ein Isoliermaterial umfasst.

7. Statorsegment (100) nach Anspruch 6, bei dem das Isoliermaterial ein Material aus der Gruppe ist, die aus Kunststoff, Holz, Gummi, Epoxidharz besteht.

8. Statorsegment (100) nach einem der vorhergehenden Ansprüche, bei dem die Stabilisierungsschicht (102) eine Federcharakteristik umfasst.

9. Stator einer elektrischen Maschine, insbesondere eines Generators, wobei der Stator mindestens ein Statorsegment (100) nach einem der vorhergehenden Ansprüche umfasst.

10. Generator, insbesondere für eine Windenergieanlage, der Folgendes umfasst:
einen Rotor und
einen Stator nach Anspruch 9.

11. Verfahren zum Herstellen eines Statorsegments (100) für einen Stator einer elektrischen Maschine, insbesondere eines Generators, wobei das Statorsegment einen Statorsegmentkörper (104) und eine Spule (105) umfasst, die so in Ausnehmungen (103) des Statorsegmentkörpers untergebracht ist, dass ein Endabschnitt (101) der Spule aus dem Statorsegmentkörper ragt, wobei das Verfahren **gekennzeichnet ist durch**:
Anbringen einer Stabilisierungsschicht (102) an dem Endabschnitt zum Reduzieren mechanischer Vibrationen des Endabschnitts,
wobei die Stabilisierungsschicht (102) nur an einem Teil einer Innenfläche des Endabschnitts (101) angebracht ist, der dem Statorsegmentkörper (104) zugewandt ist.

## Revendications

1. Segment de stator (100) pour un stator d'une machine électrique, en particulier un générateur, le segment de stator comprenant
un corps de segment de stator (104),
une bobine (105) logée dans des renfoncements (103) du corps de segment de stator de telle manière qu'une section terminale (101) de la bobine fait saillie vers l'extérieur à partir du corps de segment de stator, et **caractérisée par**
une couche stabilisatrice (102), la couche stabilisatrice étant appliquée à la section terminale pour réduire des vibrations mécaniques de la section terminale
dans lequel la couche stabilisatrice (102) n'est appliquée qu'à une partie d'une surface intérieure de la section terminale (101) faisant face au corps de segment de stator (104).

2. Segment de stator (100) selon la revendication 1, dans lequel la couche stabilisatrice (102) comprend un matériau raidisseur et/ou un matériau amortissant.

3. Segment de stator (100) selon l'une quelconque des revendications précédentes, dans lequel la couche stabilisatrice (102) est une couche double.

4. Segment de stator (100) selon l'une quelconque des revendications précédentes, dans lequel la couche stabilisatrice (102) comprend un matériau élastique.

5. Segment de stator (100) selon la revendication 4, dans lequel le matériau élastique est un matériau du groupe constitué des matières plastiques, bois, caoutchouc, époxy.

6. Segment de stator (100) selon l'une quelconque des revendications précédentes, dans lequel la couche stabilisatrice (102) comprend un matériau isolant.

7. Segment de stator (100) selon la revendication 6, dans lequel le matériau isolant est un matériau du groupe constitué des matières plastiques, bois, caoutchouc, époxy.

8. Segment de stator (100) selon l'une quelconque des revendications précédentes, dans lequel la couche stabilisatrice (102) comprend une caractéristique de ressort.

9. Stator d'une machine électrique, en particulier un générateur, le stator comprenant au moins un segment de stator (100) selon l'une quelconque des revendications précédentes.

10. Générateur, en particulier pour une éolienne, le générateur comprenant
un rotor et
un stator selon la revendication 9.

11. Procédé de fabrication d'un segment de stator (100) pour un stator d'une machine électrique, en particulier un générateur, le segment de stator comprenant un corps de segment de stator (104), et une bobine (105) étant logée dans des renfoncements (103) du corps de segment de stator de telle manière qu'une section terminale (101) de la bobine fait saillie vers l'extérieur à partir du corps de segment de stator, le procédé étant **caractérisé en ce qu'**il comprend une étape consistant à
appliquer une couche stabilisatrice (102) à la section terminale pour réduire des vibrations mécaniques de la section terminale,
dans lequel la couche stabilisatrice (102) n'est appliquée qu'à une partie d'une surface intérieure de la section terminale (101) faisant face au corps de segment de stator (104).
